# EUROPEAN PATENT APPLICATION

(11) **EP 1 970 348 A1**
(43) Date of publication of application: **17.09.2008**
(21) Application number: 08250730.2
(22) Date of filing: 04.03.2008
(51) Int. Cl.: C01B 21/068, C04B 35/584, C04B 35/593

(54) **Sintered silicon nitride and method for producing the same**

(30) Priority: 09.03.2007 JP 2007060660
(71) Applicant: NGK INSULATORS, LTD., Nagoya-city, Aichi 467-8530 (JP)
(72) Inventor: Takahashi, Takahiro, Nagoya City, Aichi-ken 467-8530 (JP); Nobori, Kazuhiro, Nagoya City, Aichi-ken 467-8530 (JP); Yamada, Naohito c/o Legal Affairs and Intellectual Property Dept., Nagoya City, Aichi-ken 467-8530 (JP); Baba, Hideyuki, Nagoya City, Aichi-ken 467-8530 (JP)
(74) Representative: Paget, Hugh Charles Edward

(57) **Abstract**

A method for producing sintered silicon nitride, including : preparing a slurry from a base powder containing a silicon nitride powder and a sintering aid, the base powder having a particle size (D₅₀) of 0.3 to 1 µm; obtaining an SD powder from the slurry by a spray dryer process; and feeding the SD powder into a forming die and firing the powder under a compaction pressure of 3 ton/cm² or more thereby obtaining sintered silicon nitride. The present invention provides a method for producing sintered silicon nitride with a higher degree of safety of the working environment.

## Description

### CROSS-REFERENCE TO RELATED APPLICATION AND INCORPORATION BY REFERENCE

This application claims benefit of priority under 35 USC 119 based on Japanese Patent Application P2007-060660, filed March 9, 2007, the entire contents of which are incorporated by reference herein.

### BACKGROUND OF THE INVENTION

### Field of the Invention

Thepresent invention relates to sinteredsiliconnitride and a method for producing the same. More specifically, the present invention relates to a method for producing sintered silicon nitride with an increased degree of safety.

### Description of the Related Art

As heat sink materials for power control devices, ceramics such as silicon nitride and aluminum nitride have been used for various reasons, such as heat conductivity, insulation, and strength. In particular, silicon nitride, although inferior to aluminum nitride in heat conductivity, is suitable for improving heat dissipation of modules because it has high strength sufficient to make thin plates.

Sintered silicon nitride is produced by steps of: providing a base powder; preparing a powder from the base powder by a spray dry (SD) process; feeding the powder into a forming die for compaction; heating the powder in the forming die for degreasing; and firing the degreased powder thereby obtaining sintered silicon nitride. In the step of preparing the powder by a spray dry process, a dispersant containing an alkali metal such as sodium pyrophosphate is commonly used. Since nitrides are generally hardly sintered, they are usually fired under pressure in a nitrogen atmosphere. The furnace, after firing, is filled with cyan gas, so that workers are required to wear protective equipment and be cautious. In addition, by-products accumulate on the polar zone during repeated firing. The accumulated by-products deteriorate the insulation resistance between the heater and the furnace body. Therefore, the inside of the furnace must be cleaned periodically. Under the circumstances, a method for producing sintered silicon nitride with a high degree of safety of the process has been desired.

In addition, for some applications of sintered silicon nitride, an alkali metal-free sintered silicon nitride has been desired. However, there has been no means for solving the problems.

### SUMMARY OF THE INVENTION

According to a first aspect of the present invention, a sintered silicon nitride includes about 0.01% by weight of sodium (Na). The Na content is typically in the range 0.005 to 0.01% by weight.

According to a second aspect of the present invention, a method for producing sintered silicon nitride, includes: preparing a slurry from a base powder containing a silicon nitride powder and a sintering aid and having a particle size D₅₀ of about 0.3 to about 1 µm; obtaining an SD powder from the slurry by a spray dryer process; and feeding the SD powder into a forming die and firing the powder under a compaction pressure of about 3 ton/cm² or more thereby obtaining sintered silicon nitride.

According to a third aspect of the present invention, a method for producing sintered silicon nitride, includes:preparing a slurry containing a silicon nitride powder, a sintering aid, and a quaternary ammonium compound; obtaining an SD powder from the slurry by a spray dryer process; and feeding the SD powder into a forming die and firing the powder under a compaction pressure of about 1 to about 10 ton/cm² thereby obtaining sintered silicon nitride.

### DETAILED DESCRIPTION OF THE INVENTION

According to the invention, a method for producing sintered silicon nitride with a high degree of safety of the working environment is provided.

The present invention is further described below with reference to the following embodiments, but the present invention is not limited to the embodiments.

With an eye toward improving the degree of safety of the process for the production of sintered silicon nitride, the inventors studied the mechanism by which the cyan gas is generated. As a result, the following fact has been determined: when silicon nitride ceramic containing an alkali metal is fired under pressure of nitrogen, as represented by the formula 1, an alkali cyanide is generated in the furnace, and when the furnace door is opened, the alkali metal in the cyanide reacts with moisture in the air as represented by the formula 2, and decomposes to generate toxic cyan gas.

Formula 1: 2Na + N₂ + 4CO ⇔ 2NaCN + 2CO₂ 2CO ⇔ CO₂ + C

Formula 2: NaCN + H₂O → NaOH + HCN

The formula 1 also indicates that carbon adheres to the furnace wall and deteriorates the heat-resistant insulation between the furnace body and an electrode.

From the viewpoints of improving the degree of safety of the working environment and reducing the maintenance cost for the furnace, a method for producing sintered silicon nitride without generating cyan gas is desired. Accordingly, the inventors studied the above findings, and have developed (1) a first embodiment using no dispersant, and (2) a second embodiment using an alkali metal-free dispersant.

### (Method for producing sintered silicon nitride)

### (First embodiment)

The method for producing sintered silicon nitride according to the first embodiment includes: (1) preparing a slurry from a base powder; (2) preparing an SD powder from the base powder by a spray dryer process; (3) feeding the SD powder into a forming die for compacting the powder; (4) heating the SD powder in the forming die for degreasing; and (5) firing the degreased SD powder and thereby obtaining sintered silicon nitride. These steps are further described below.
Step (1): As raw materials, water and a base powder composed of silicon nitride, a sintering aid, and a binder are provided. The silicon nitride is not particularly limited, and may be a commercial product. The particle size D₅₀ of the base powder is preferably from about 0.3 to about 1 µm, and more preferably from about 0.4 to about 0.8 µm. The particle size D₅₀ of the base powder corresponds to a volume fraction of 50% measured by sieving in accordance with JIS M8706. The sintering aid is not particularly limited, and may be, for example, yttrium oxide, magnesium oxide, or aluminum oxide. The binder is not particularly limited, and may be, for example, PVA, PEG, PVB, MC, or an acrylic binder. The water is not particularly limited, and may be ion exchanged water. Subsequently, these raw materials are measured to obtain proportions of 90 to 99% by weight silicon nitride, 0 to 5% by weight the sintering aid, 35 to 50% by weight water, and 0.5 to 5% by weight the binder with reference to the total weight of the raw materials. The measured base powder is mixed in a beads mill such as attritor^{™} for about 2 to about 24 hours to produce a slurry. The viscosity of the slurry is preferably from about 0.1 to about 5 poise, and more preferably from 0.1 to 3 poise.
Step (2) : The obtained slurry is spray dried to obtain an SD powder. The spray dry conditions preferably include, for example, a disk rotation speed of about 5000 to about 20000 rpm, an inlet temperature of about 150 to about 250°C, and an outlet temperature of 80 to 150°C.
Step (3) : The SD powder obtained by the spray dry process is fed into a forming die for compaction. The compaction conditions slightly vary depending on the size or shape of the work such as a silicon nitride body. For example, in cases where a die having a size of 100 mm × 100 mm is used, the powder is preformed under a pressure of about 100 to about 500 kg/cm², and then formed by a cold isostatic pressing (CIP) process under a pressure of about 3 ton/cm² or more to provide a compacted powder.
Step (4): The obtained compacted powder is heated in the presence of the air inside a furnace at a temperature that increases at a rate of about 5 to about 50°C/hour, and the compacted powder is heated at about 500°C for about 2 to about 24 hours for degreasing.
Step (5): The degreased compacted powder is heated at a temperature that increases at a rate of about 50 to about 500°C/hour under a pressure of about 10 atmospheres (gauge pressure) or less, preferably from about 2 to about 10 atmospheres of nitrogen, and fired at about 1700°C to about 1900°C for about 4 to about 24 hours to obtain a final product.

The method for producing sintered silicon nitride according to the first embodiment does not produce any cyan gas thereby improving the degree of safety of the working environment and extending the life cycle of the furnace body. The yield of the SD powder obtained by the spray dry process is about 65% or more, preferably about 70%, wherein the powder yield represented by the formula 3: powder yield (%) = recovered raw materials/loaded raw materials × 100. In cases where firing is conducted until the resistance difference between the furnace body and the electrode becomes less than about 100 Ω, the periphery of the electrode is cleaned five times or more, and the furnace body is replaced five times or more. The waste of the product (g/1 kg of silicon nitride), or the amount of the product adhering to the furnace wall after firing is about 0.1 g or less.

### (Second embodiment)

The method for producing sintered silicon nitride according to the second embodiment includes the same working steps as the first embodiment. The method is further described below with emphasis on the differences between the embodiments.

Steps (1) and (2) : The raw materials include a dispersant in addition to the materials according to the first embodiment. The dispersant is not particularly limited, and may be, for example, a phosphate, an alkyl sulfate salt, a polyoxyethylenealkyl ether sulfate salt, an alkylbenzene sulfonate, a sulfonate, a fatty acid salt, a naphthalene sulphonic acid-formalin condensate, a polymer surfactant, a polyoxyethylene alkyl ether, a polyoxyalkylene alkyl ether, a sorbitan fatty acid ester, analkylaminesalt, oraquaternary ammonium compound. Among the foregoing, a quaternary ammonium compound, in particular, quaternary ammonium hydroxide is preferable. The particle size (D₅₀) of the base powder is preferably from about 0.3 to about 1 µm, and more preferably from about 0.4 to about 0.8 µm. The proportions of the raw materials with reference to the total weight are preferably 90 to 99% by weight silicon nitride, 0 to about 5% by weight the sintering aid, about 35 to about 50% by weight water, about 0.5 to about 5% by weight the binder, and about 0.5 to about 5% by weight the dispersant.

Step (5): In the step of obtaining sintered silicon nitride, firing is conducted for about 4 to about 24 hours at about 1700 to about 1900°C under a pressure of about 10 atmospheres or less, preferably from about 2 to about 10 atmospheres of nitrogen.

With the aim of solving the above problems, the inventors replaced the dispersant containing an alkali metal such as sodium pyrophosphate with a different dispersant, and have found that the generation of toxic substances is suppressed. However, there are problems such as deterioration in the properties of the sintered body caused by poor dispersibility during spray drying, destabilization, and deterioration of the yield of the SD powder during spray drying. On the other hand, the method for producing sintered silicon nitride according to the second embodiment uses a quaternary ammonium compound as the dispersant, which suppressed the generation of cyan gas. As a result, the degree of safety of the working environment is improved, the life cycle of the furnace body is extended, and the yield of the SD powder is improved. The yield of the SD powder obtained by the spray dry process is about 70% or more, preferably about 80% or more as calculated by formula 3. Cleaning is performed five times or more, and the furnace body is replaced five times or more. The waste of the product (g/1 kg of silicon nitride), or the amount of the product adhering to the furnace wall after firing is about 0.1 g or less.

The physical properties of the sintered silicon nitride obtained by the method for producing sintered silicon nitride according to the second embodiment are the same as the sintered silicon nitride according to the first embodiment.

### (Sintered silicon nitride)

The physical properties of the sintered silicon nitride according to the embodiment include the following: the content of sodium (Na) in the sintered silicon nitride is about 0.01% by weight or less; the lower limit of the content of sodium in the sintered silicon nitride is not particularly limited, but is about 0.005% by weight; the density is about 3.20 g/cm³ or more, preferably from about 3.21 g/cm³ to about 3.23 g/cm³; the relative density is about 99% or more, preferably from about 99.5% to about 99.9%; the strength is about 850 Mpa or more, preferably from about 900 Mpa to about 1,100 Mpa; the K_{IC} is about 8.0 MPam^{1/2} or more, preferably about 8.2 MPam^{1/2} to about 9.0 MPam^{1/2}; the heat conductivity is about 55 W/mK or more, preferably from about 57 W/mK to about 65 W/mK; the volume resistance is about 5.0 × 10¹⁴ Ω·cm or more, preferably about 1.0 × 10¹⁵ Ω·cm to about 1.0 × 10¹⁶ Ω·cm; the alkali metal content is about 0.1% by weight or less, preferably about 0.05% by weight or less with reference to the total weight of the sintered silicon nitride. When the above properties are satisfied, the sintered silicon nitride according to the first or second embodiments is useable as, for example, a heat sink for a semiconductor device. In particular, because the sintered silicon nitride is highly heat resistance and strong, it is excellent for use as a heat sink for a semiconductor device in an electrically-powered control system. The sintered silicon nitride is obtained by the method for producing sintered silicon nitride according to the first or second embodiment.

### (Other embodiment)

The present invention has been described above with reference to the embodiments, but the statement and drawings forming part of the disclosure should not be understood as limiting the present invention. The disclosure will make various alternative embodiments, examples, and applied techniques apparent to those skilled in the art. Thus, the present invention includes, of course, various embodiments not described herein. Accordingly, the technical scope of the present invention is defined exclusively by the particular items of the present invention according to the appended claims, which are valid on the basis of the above-described explanation.

### EXAMPLES

Examples of the present invention are described below, but the present invention is not limited to these examples.

### <Examples 1, 2, 3, and Comparative Example 1>

Sintered silicon nitride was produced by the method for producing sintered silicon nitride according to the first embodiment, under the preparation conditions listed in Tables 1 and 2.

Note:** Upper stage: measured value (N=10), lower stage: s (N=10)

Alkali metal composition (wt%) is based on the entire weight of the slurry.

**table 1**

| | Example 1 | Example 2 | Example 3 |
|---|---|---|---|
| Dispersant | None | None | None |
| Particle size of the base powder (D₅₀) | 0.8 | 0.3 | 0.3 |
| Alkali metal composition (wt%) | 0.004 | 0.004 | 0.004 |
| Viscosity of the slurry (poise) | 1.5 | 2.0 | 4.5 |
| Compaction pressure (ton/cm²) | 4.0 | 3.0 | 10.0 |
| Firing condition | 1850°C for 8 hrs, 10 atmospheres of nitrogen | 1850°C for 8 hrs, 10 atmospheres of nitrogen | 1850°C for 8 hrs, 10 atmospheres of nitrogen |
| Yield of the SD powder (%) | 70 | 65 | 65 |
| Concentration of cyan gas (ppm) | <0.2 | <0.2 | <0.2 |
| Number of cleaning in the periphery of the electrode | 7 | 7 | 6 |
| Waste of the product (g/1 kg of silicon nitride) | 0 | 0 | 0 |

| Properties of the SN sintered body | | | |
|---|---|---|---|
| Density (g/cm³) | 3.22 | 3.21 | 3.23 |
| Relative density (%) | 99 | 99 | 99 |
| Strength (MPa)** | 910 | 890 | 931 |
| | 54 | 42 | 45 |
| K_{IC} | 8.3 | 8.1 | 8.2 |
| Heat conductivity (W/mk) | 58 | 57 | 62 |
| Volume resistance (Wxcm) | 8.9E+14 | 7.3E+14 | 1.2E+15 |

**table 2**

| | Reference Example 1 | Comparative Example 1 |
|---|---|---|
| Dispersant | None | Added (sodium pyrophosphate) |
| Particle size of the base powder (D₅₀) | 0.1 | 0.3 |
| Alkali metal composition (wt%) | 0.004 | 0.04 |
| Viscosity of the slurry (poise) | 4.3 | 0.5 |
| Compaction pressure (ton/cm²) | 1.5 | 1.0 |
| Firing condition | 1850°C for 8 hrs, 10 atmospheres of 10 nitrogen | 1850°C for 8 hrs, 10 1850°C for 8 hrs, 10 atmospheres of nitrogen |
| Yield of the SD powder (%) | 40 | 90 |
| Concentration of cyan gas (ppm) | <0.2 | >30 |
| Number of cleaning in the periphery of the electrode | 7 | 1 |
| Waste of the product (g/1 kg of silicon nitride) | 0 | 4.7 |

| Properties of the SN sintered body | | |
|---|---|---|
| Density (g/cm³) | 3.17 | 3.22 |
| Relative density (%) | 97 | 99 |
| Strength (MPa)** | 820 | 970 |
| | 110 | 47 |
| K_{IC} | 7.8 | 8.5 |
| Heat conductivity (W/mk) | 54 | 62 |
| Volume resistance (W×cm) | 2.3E+13 | 3.0E+14 |

Examples 1, 2, 3, and Comparative Example 1 indicate that the concentration of cyan gas and the formation of the cyanide compound decrease when the alkali metal component is 0.01% by weight or less (impurity level). Examples 1 to 3, and Comparative Example 1 (conventional example) indicate that silicon nitride ceramic with favorable properties such as density, strength, heat conductivity, volume resistance is produced by appropriately controlling the particle size of the base powder and compaction pressure. Examples 1 to 3 indicate that the particle size of the base powder is preferably from 0.3 to 0.8 µm.

Examples 1 to 3 indicate that the compaction pressure is preferably 3.0 ton/cm² or more. From specifically a technical standpoint, the compaction pressure is not particularly limited as to its upper limit as long as it does not exceed the upper limit for the compaction equipment.

### <Comparison between Examples 4, 5, 6, 7, and Reference Examples 2, 3, 4, and 5>

Sintered silicon nitride was produced by the method according to the second embodiment, under the preparation conditions listed in Tables 3 and 4.
Note:** Upper stage: measured value (N=10), lower stage: s (N=10)

Alkali metal composition (wt%) is based on the entire weight of the slurry.

**table 3**

| | Example 4 | Example 5 | Example 6 | Example 7 |
|---|---|---|---|---|
| Dispersant | Added (quaternary ammonium hydroxide) | Added (quaternary ammonium chloride) | Added (quaternary ammonium hydroxide) | Added (quaternary ammonium hydroxide) |
| Particle size of the base powder (D₅₀) | 0.4 | 0.4 | 0.4 | 0.4 |
| Alkali metal composition (wt%) | 0.005 | 0.005 | 0.005 | 0.005 |
| Viscosity of the slurry (poise) | 0.6 | 1.3 | 1.3 | 1.3 |
| Compaction pressure (ton/cm²) | 3.0 | 2.0 | 1.5 | 1.5 |
| Firing condition | 1850°C for 5 hrs, 9 atmospheres of nitrogen | 1850°C for 24 hrs, 3 atmospheres of nitrogen | 1890°C for 24 hrs, 9 atmospheres of nitrogen | 1720°C for 24 hrs, 9 atmospheres of nitrogen |
| Yield of the SD powder (%) | 91 | 75 | 91 | 91 |
| Concentration of cyan gas (ppm) | <0.2 | <0.2 | <0.2 | <0.2 |
| Number of cleaning in the periphery of the electrode | 7 | 7 | 6 | 6 |
| Waste of the product (g/1 kg of silicon nitride) | 0 | 0 | 0 | 0 |

| Properties of the SN sintered body | | | | |
|---|---|---|---|---|
| Density (g/cm³) | 3.22 | 3.22 | 3.23 | 3.21 |
| Relative density (%) | 99 | 99 | 99 | 99 |
| Strength (MPa)** | 875 | 921 | 930 | 1100 |
| | 45 | 50 | 48 | 42 |
| K_{IC} | 8.5 | 8.2 | 8.1 | 8.4 |
| Heat conductivity (W/mk) | 60 | 58 | 62 | 59 |
| Volume resistance (Wxcm) | 4.0E+15 | 1.7E+15 | 2.2E+15 | 1.4E+15 |

**table 4**

| | Reference Example 2 | Reference Example 3 | Reference Example 4 | Reference Example 5 |
|---|---|---|---|---|
| Dispersant | Added (quaternary ammonium hydroxide) | Added (polycarboxylic surfactant) | None | None |
| Particle size of the base powder (D₅₀) | 0.4 | 0.3 | 0.3 | 0.3 |
| Alkali metal composition (wt%) | 0.005 | 0.005 | 0.004 | 0.004 |
| Viscosity of the slurry (poise) | 1.3 | 3.1 | 3.1 | 3.1 |
| Compaction pressure (ton/cm² ) | 1.5 | 2.0 | 2.0 | 2.0 |
| Firing condition | 1940°C for 24 hrs, 3 atmospheres of nitrogen | 1850°C for 3 hrs, 1 atmospheres of nitrogen | 1680°C for 24 hrs, 9 atmospheres of nitrogen | 1850°C for 40 hrs, 3 atmospheres of nitrogen |
| Yield of the SD powder (%) | 91 | 67 | 65 | 65 |
| Concentration of cyan gas (ppm) | <0.2 | <0.2 | <0.2 | <0.2 |
| Number of cleaning in the periphery of the electrode | 7 | 7 | 7 | 7 |
| Waste of the product (g/1 kg of silicon nitride) | 0 | 0 | 0 | 0 |

| Properties of the SN sintered body | | | | |
|---|---|---|---|---|
| Density (g/cm³) | 3.13 | 3.18 | 2.95 | 3.01 |
| Relative density (%) | 93 | 98 | 90 | 91 |
| Strength (MPa)** | 660 | 812 | 520 | 553 |
| | 50 | 77 | 83 | 79 |
| K_{IC} | 8.2 | 7.8 | 7.8 | 8.0 |
| Heat conductivity (W/mk) | 58 | 56 | 58 | 59 |
| Volume resistance (Wxcm) | 2.7E+14 | 3.0E+14 | 4.6E+13 | 5.2E+13 |

Examples 4 to 7 indicate that the dispersant is preferably a quaternary ammonium compound, particularly quaternary ammonium hydroxide, and that the proportion of the dispersant is preferably from 0.5 to 5% by weight with reference to the total weight of the base powder. If the proportion is less than 0.5% by weight, the dispersion effect is insufficient, and if more than 5% by weight, the dispersion effect does not improve any more.

Examples 4 to 7 indicate that firing is preferably conducted at a temperature of 1720°C to 1890°C for 5 to 24 hours under pressure of 3 to 9 atmospheres (gauge pressure) of nitrogen.

### <Evaluation criteria>

The physical properties and others such as Cyan gas concentration, Slurry viscosity, Base powder particle size, Composition, Density, Strength, KIC, Heat conductivity, and Volume resistance were evaluated on the basis of the evaluation criteria listed in Table 5.

**table 5**

| Measurement item | Measurement method | Sample form |
|---|---|---|
| Cyan gas concentration | The inside of the furnace is measured with a portable HCN detector (SC90) manufactured by Riken Keiki Co., Ltd. | - |
| Slurry viscosity | JIS R1652, Type C viscometer | 150 cm³ of slurry |
| Base powder particle size | JIS M8706, Sieving | 100 g of base powder |
| Composition | JIS R1603, ICP spectrometry | - |
| Density | JIS R2205 | 3 × 4 × 40 mm |
| Strength | JIS R1601, 4 point bending test | 3 × 4 × 40 mm |
| K_{IC} | JIS R1607, SEPB method | 3 × 4 × 40 mm |
| Heat conductivity | JIS R1611, Laser flush method | ϕ 9.9 × 3 mm |
| Volume resistance | JIS C2141 | 60 × 60 × 1 mm |

## Claims

1. A sintered silicon nitride comprising about 0.01% by weight of sodium (Na).

2. A method for producing sintered silicon nitride, comprising:
preparing a slurry from a base powder containing a silicon nitride powder and a sintering aid, the base powder having a particle size D₅₀ of about 0.3 to about 1 µm;
obtaining an SD powder from the slurry by a spray dryer process; and
feeding the SD powder into a forming die and firing the powder under a compaction pressure of about 3 ton/cm² or more, thereby obtaining sintered silicon nitride.

3. The method for producing sintered silicon nitride according to Claim 2, wherein the compaction pressure is from about 3 to about 10 ton/cm².

4. The method for producing sintered silicon nitride according to Claim 2 or 3, wherein the viscosity of the slurry is from about 0.1 to about 5 poise.

5. A method for producing sintered silicon nitride, comprising:
preparing a slurry containing a silicon nitride powder, a sintering aid, and a quaternary ammonium compound;
obtaining an SD powder from the slurry by a spray dryer process; and
feeding the SD powder into a forming die and firing the powder under a compaction pressure of about 1 to about 10 ton/cm², thereby obtaining sintered silicon nitride.

6. The method for producing sintered silicon nitride according to Claim 5, wherein the content ration of the quaternary ammonium compound is about 0.5 to about 5.0% by weight with reference to the total weight of the slurry.

7. The method for producing sintered silicon nitride according to Claim 5 or 6, wherein the quaternary ammonium compound is quaternary ammonium hydroxide.

8. The method for producing sintered silicon nitride according to any one of Claims 5 to 7, wherein the firing is conducted for 4 to 24 hours at a temperature of about 1700 to about 1900°C under a pressure of about 10 atmospheres or less of nitrogen.

9. The method for producing sintered silicon nitride according to Claim 8, wherein the firing is conducted under a pressure of about 2 to about 10 atmospheres of nitrogen.
